# EUROPÄISCHE PATENTSCHRIFT

(11) **EP 1 459 838 B1**
(45) Veröffentlichungstag und Bekanntmachung des Hinweises auf die Patenterteilung: **11.07.2007**
(21) Anmeldenummer: 04005697.0
(22) Anmeldetag: 10.03.2004
(51) Int. Cl.: B23Q 7/14, B23Q 7/02

(54) **Vertikal-Bearbeitungszentrum**
Vertical machining center
Centre d'usinage vertical

(30) Priorität: 18.03.2003 DE 10311762
(43) Veröffentlichungstag der Anmeldung: 22.09.2004
(73) Patentinhaber: Bautz, Walter, 64287 Darmstadt (DE)
(72) Erfinder: Bautz, Walter, 64287 Darmstadt (DE)
(74) Vertreter: Hebing, Norbert

(56) Entgegenhaltungen:
- DE-A- 3 505 138
- DE-U- 8 603 558
- US-A- 3 825 245
- US-A- 4 679 286
- US-A- 5 478 300

## Beschreibung

Die Erfindung betrifft ein Vertikal-Bearbeitungszentrum mit einem gesteuert verfahrbaren Werkzeugschlitten und mit einer Werkstückzuführung an einer Seite eines Bearbeitungsbereiches, bei der zum Wechseln von Werkstücken zwischen der Werkstückzuführung und dem Bearbeitungsbereich ein gesteuert in zumindest einer Achse verfahrbares Bauteil des Vertikal-Bearbeitungszentrums vorgesehen ist, wobei die werkstückzuführung zur Bereithaltung und Aufnahme von Werkstückhaltern mit Werkstücken ausgebildet und fluchtend zu einem CNC-Rundtisch an der Seite des Vertikal-Bearbeitungszentrums: angeordnet ist, an der der jeweilige Werkstückhalter vom CNC-Rundtisch gehalten ist, und wobei die werkstückzuführung als getaktet verfahrbares Magazin mit mehreren Aufnahmen für werkstückhalter ausgebildet ist.

Wegen des zuletzt genannten Merkmals kann der werkstückwechsel besonders rasch erfolgen und erfordert deshalb nur kurze Stillstandszeiten des Vertikal-Bearbeitungszentrums. Somit können während des Arbeitens des vertikal-Bearbeitungszentrums Werkstückhalter im Magazin gewechselt werden, so dass bei Stillstand des Vertikal-Bearbeitungszentrums ein gewünschter werkstückhalter unmittelbar zur Übernahme bereitstehen kann.

Ein derartiges Bearbeitungszentrumist in der US 4,679,286 beschrieben. Paletten mit den zu bearbeitenden Werkstücken befinden sich auf einem 4-armigen Palettenhalter und werden von dort über eine fest mit dem Rahmen des Bearbeitungszentrums verbundene Zwischenstation, in der sich ein Transferzylinder zum Verschieben der Paletten befindet, zum CNC-Rundtisch verschoben.

Ein als Drehmaschine ausgebildetes Vertikal-Bearbeitungszentrum ist Gegenstand der EP 0 539 837. Bei dem bekannten Vertikal-Bearbeitungszentrum ist an dem in zwei Achsen verfahrbaren Werkzeugschlitten an zwei gegenüberliegenden Seiten jeweils ein Greifer angeordnet, der durch Verfahren des Werkzeugschlittens einzelne Werkstücke von der Werkzeugzuführung aufnehmen, einem Spannfutter einer Spindel zuführen und nach der Bearbeitung von dem Spannfutter zu einer Ablage zu transportieren vermag.

Bei CNC-gesteuerten Vertikal-Bearbeitungszentren, insbesondere 3- und 4-Achsen-Vertikal-Fahrständer-Bearbeitungszentren, führt man zum Zwecke des automatischen Werkstückwechsels häufig als Werkstückspannträger ausgebildete Werkstückhalter mit jeweils mehreren dort eingespannten Werkstücken mittels entsprechender Handhabungsund Transporteinrichtungen in den Arbeitsbereich des vertikal-Bearbeitungszentrums ein und spannt sodann den jeweiligen Werkstückhalter in einen CNC-gesteuerten oder beispielsweise durch Festanschläge gesteuerten Rundtisch mit horizontaler Drehachse. Die Werkstückhalter können sowohl als Palette, zum Beispiel mit jeweils zwei Spannseiten, oder als Spanntürme ausgebildet sein. Bei einer solchen Anordnung kann man mehrere Werkstücke hintereinander von jeweils mehreren Bearbeitungsseiten in einer Spannung ohne Unterbrechung bearbeiten und umgeht damit die Einzelbearbeitung der Werkstücke und deren platz- und zeitaufwändige Ein- und Ausspannoperationen.

Der Erfindung liegt das Problem zugrunde, ein Vertikal-Bearbeitungszentrum der eingangs genannten Art so auszubilden, dass mehrere Werkstücke gleichzeitig zwischen der Werkstückzuführung bzw. einem Werkstückträger-Magazin und dem Arbeitsbereich automatisch gewechselt werden können, ohne dass das Vertikal-Bearbeitungszentrum hierzu aufwändig ausgebildet werden muss.

Zur Lösung des Problems sieht die Erfindung vor, dass zum Wechseln der Werkstückhalter der CNC-Rundtisch auf Führungen in Richtung der Werkstückzuführung verfahrbar ist und dass ein Gegen-Spannstock zum Halten des Werkzeughalters an der dem CNC-Rundtisch abgewandten, zur Werkstückzuführung weisenden Seite vorgesehen ist, wobei der Gegen-Spannstock quer zum CNC-Rundtisch aus dem Kollisionsbereich mit dem Werkstückhalter verfahrbar angeordnet ist. Dann kann man den Wechsel der Werkstückhalter allein durch Verfahren des CNC-Rundtisches vornehmen.

Gemäß einer weiteren Lösung ist es auch möglich, mit dem Gegen-Spannstock den Wechsel der Werkstückhalter vorzunehmen. Das ist mit besonders geringem baulichen Aufwand bei dem Vertikal-Bearbeitungszentrum möglich, wenn der Gegen-Spannstock einen Halter zum Spannen des Werkzeugträgers hat, der zum Verschwenken des jeweiligen Werkzeugträgers um 180° zwischen einer dem CNC-Rundtisch und einer der Werkstückzuführung zugewandten Stellung ausgebildet ist und wenn der Gegen-Spannstock auf Führungen in Richtung der Werkstückzuführung verfahrbar ist.

Auf einen Teil der Verfahrantriebe einschließlich der zugehörigen Messsysteme des CNC-Rundtisches oder Gegen-Spannstockes kann dadurch verzichtet werden, dass zum Verfahren des CNC-Rundtisches oder des Gegen-Spannstockes am Werkzeugschlitten und dem CNC-Rundtisch bzw. dem Gegen-Spannstock Andockmittel vorgesehen sind. Hierdurch hat man die Möglichkeit, dass der Werkzeugschlitten den CNC-Rundtisch bzw. den Gegen-Spannstock in die jeweils gewünschte Position schleppt.

Konstruktiv besonders einfach ist die Werkstückzuführung gestaltet, wenn sie ein um eine zentrale Achse schwenkbares Magazinrad mit den Aufnahmen aufweist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig.1: eine perspektivische Ansicht eines erfindungsgemäßen Vertikal-Bearbeitungszentrums
- Fig.2: eine Prinzipdarstellung des Vertikal-Bearbeitungszentrums,
- Fig.3: eine Prinzipdarstellung einer zweiten Ausführungsform des Vertikal-Bearbeitungszentrums.

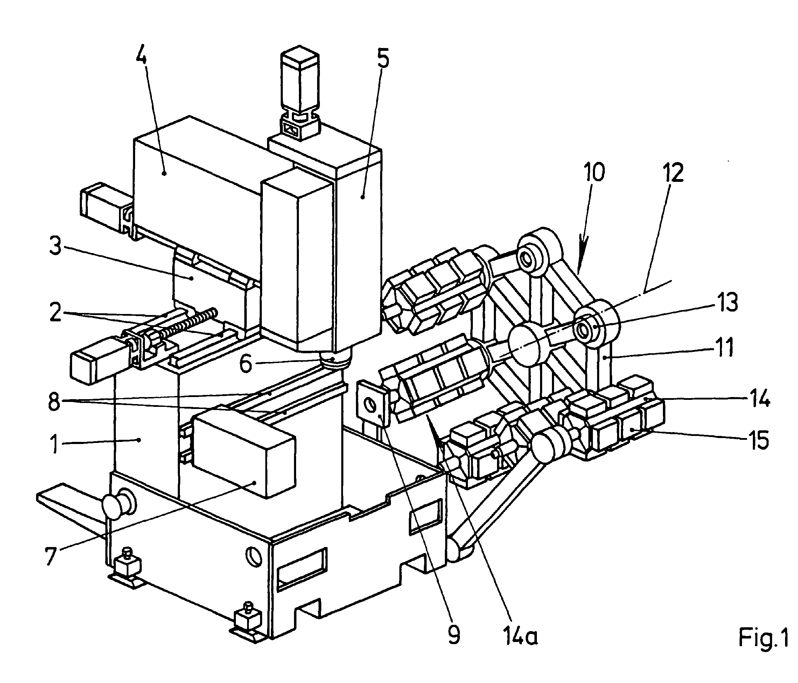

Die Figur 1 zeigt ein Maschinengestell 1 mit Führungen 2, auf denen ein Längsschlitten 3 gesteuert verfahrbar ist. Auf diesem Längsschlitten 3 ist ein Querschlitten 4 verfahrbar, der einen hierzu in Vertikalrichtung verfahrbaren Werkzeugschlitten 5 mit einer Hauptspindel 6 trägt.

Das Vertikal-Bearbeitungszentrum hat weiterhin einen lediglich als Block dargestellten CNC-Rundtisch 7, der auf parallel zu den Führungen 2 verlaufenden Führungen 8 verfahrbar ist. An der rechten Seite des Maschinengestells 1 erkennt man einen mit dem CNC-Rundtisch 7 fluchtenden Gegen-Spannstock 9. Ebenfalls an der rechten Seite des Maschinengestells 1 ist eine als Werkstückmagazin ausgebildete Werkstückzuführung 10 zu erkennen. Diese hat ein Magazinrad 11, welches um eine Achse 12 schwenkbar ist und Aufnahmen 13 für Werkstückhalter 14 aufweist. Diese Werkstückhalter 14 tragen Werkstücke 15 und könnten deshalb als Mehrteile-Werkstückspannträger bezeichnet werden.

Zum Beschicken des Vertikal-Bearbeitungszentrums mit einem Werkstückhalter 14a fährt zunächst der Gegen-Spannstock 9 nach vorn oder unten. Dann fährt der CNC-Rundtisch 7 in Richtung des Werkstückhalters 14a und nimmt das ihm zugewandte Ende des Werkstückhalters 14a auf. Anschließend fährt der CNC-Rundtisch 7 mit dem Werkstückhalter 14a zurück nach links, bis der Gegen-Spannstock 9 wieder in seine gezeigte Position fahren und das andere Ende des Werkstückhalters 14a aufnehmen kann. Die Bewegung des CNC-Rundtisches 7 kann durch einen nicht gezeigten, eigenen Antrieb erfolgen. Möglich ist es aber auch, ihn mit Hilfe des Werkzeugschlittens 5 zu verschieben. Der Gegen-Spannstock 9 kann beispielsweise mittels eines ebenfalls nicht gezeigten Hydraulikzylinders verfahren werden.

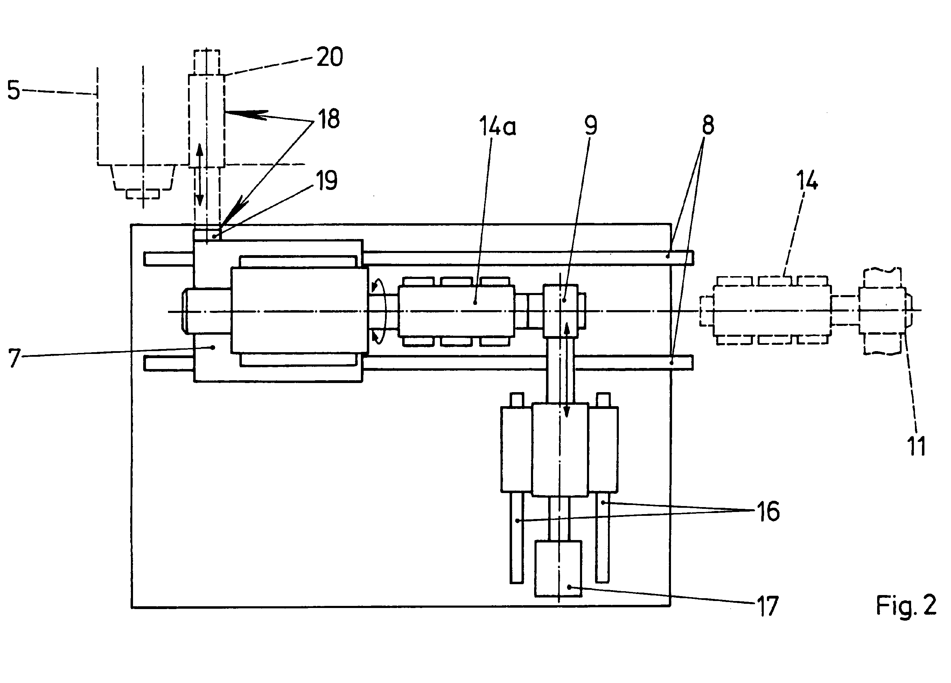

In Figur 2 ist ein Werkstückhalter 14a in Bearbeitungsposition dargestellt. Er wird in dieser Position von dem CNC-Rundtisch 7 und dem Gegen-Spannstock 9 gehalten. Ebenfalls erkennbar sind in Figur 2 die Führungen 8, auf denen der CNC-Rundtisch 7 verfahrbar ist. Weiterhin zeigt Figur 2 quer hierzu ausgerichtete Schienen 16, durch die der Gegen-Spannstock 9 quer zur Verfahrbarkeit des CNC-Rundtisches 7 verfahrbar ist. Der CNC-Rundtisch 7 ist in der in Figur 2 gezeigten Position über Andockmittel 18 mit dem Werkzeugschlitten 5 verbunden. Dadurch kann man mittels des Werkzeugschlittens 5 den CNC-Rundtisch 7 auf den Führungen 8 verfahren. Die Andockmittel 18 bestehen aus einem Kuppelteil 19 am CNC-Rundtisch und einem Stößel 20 am Werkzeugschlitten 5.

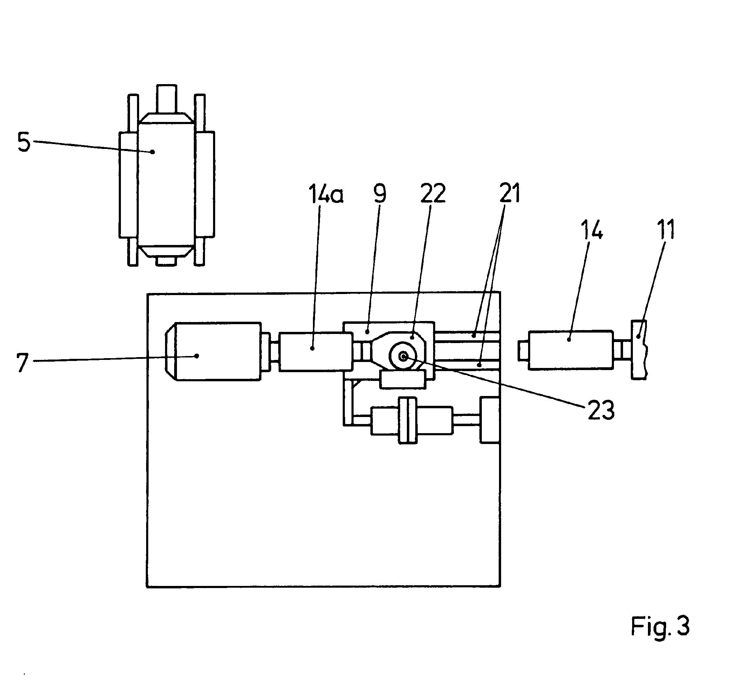

Bei der Ausführungsform nach Figur 3 ist der CNC-Rundtisch 7 unverfahrbar angeordnet. Statt dessen lässt sich jedoch der Gegen-Spannstock 9 auf Führungen 21 in Richtung des Magazinrades 11 verschieben. Der Gegen-Spannstock 9 hat bei dieser Ausführungsform einen Halter 22, der um eine senkrecht zu den Führungen 21 verlaufende Achse 23 um 180° verschwenkbar ist. Dadurch kann man einen Werkstückhalter 14a aus der dem CNC-Rundtisch 7 zugewandten Stellung in eine dem Magazinrad 11 zugewandte Stellung verschwenken, um den Werkstückhalter 14a durch Verfahren des Gegen-Spannstockes 9 auf den Führungen 21 in das Magazinrad 11 abzulegen. Entsprechend kann man einen neuen Werkstückhalter 14 dem Magazinrad 11 entnehmen und im CNC-Rundtisch 7 einsetzen.

Nicht dargestellt ist, dass der Werkstückzuführung 10 eine gesonderte Umrüst- und Werkstück-Be- und -Entladestation vorgeschaltet sein kann, welche aus der Werkstückzuführung zeitlich parallel zur Bearbeitung halb-oder vollautomatisch hintereinander die einzelnen Werkstückhalter entnehmen kann, um sie dort mit neuen Rohteilen zu beschicken, auf neue Teile umzurüsten oder den Werkstückhalter gegen einen anderen auszutauschen und diesen anschließend wieder in gleicher Weise der Werkstückzuführung zuzuführen.

### Bezugszeichenliste

- 1: Maschinengestell
- 2: Führung
- 3: Längsschlitten
- 4: Querschlitten
- 5: Werkzeugschlitten

- 6: Hauptspindel
- 7: CNC-Rundtisch
- 8: Führungen
- 9: Gegen-Spannstock
- 10: Werkstückzuführung

- 11: Magazinrad
- 12: Achse
- 13: Aufnahmen
- 14: Werkstückhalter
- 15: Werkstück

- 16: Schiene
- 17: Hydraulikzylinder
- 18: Andockmittel
- 19: Kuppelteil
- 20: Stößel

- 21: Führung
- 22: Halter
- 23: Achse

## Patentansprüche

1. Vertikal-Bearbeitungszentrum mit einem gesteuert verfahrbaren Werkzeugschlitten (5) und mit einer Werkstückzuführung (10) an einer Seite eines Bearbeitungsbereiches, bei der zum wechseln von Werkstücken (15) zwischen der Werkstückzuführung (10) und dem Bearbeitungsbereich ein gesteuert in zumindest einer Achse verfahrbares Bauteil des vertikal-Bearbeitungszentrums vorgesehen ist, wobei die Werkstückzuführung (10) zur Bereithaltung und Aufnahme von Werkstückhaltern (14) mit Werkstücken (15) ausgebildet und fluchtend zu einem CNC-Rundtisch (7) an der Seite des Vertikal-Bearbeitungszentrums angeordnet ist, an der der jeweilige Werkstückhalter (14) vom CNC-Rundtisch (7) gehalten ist, und wobei die Werkstückzuführung (10) als getaktet verfahrbares Magazin mit mehreren Aufnahmen (13) für Werkstückhalter (14) ausgebildet ist, **dadurch gekennzeichnet, dass** zum Wechseln der Werkstückhalter (14) der CNC-Rundtisch (7) auf Führungen (8) in Richtung der Werkstückzuführung (10) verfahrbar ist und dass zusätzlich zum CNC-Rundtisch (7) ein Gegen-Spannstock (9) zum Halten des Werkzeugträgers an der dem CNC-Rundtisch (7) abgewandten, zur Werkstückzuführung (10) weisenden Seite vorgesehen ist, wobei der Gegen-Spanristock (9) aus dem Kollisionsbereich mit dem Werkstückhalter (14) verfahrbar angeordnet ist.

2. Vertikal-Bearbeitungszentrum nach dem Oberbegriff des Anspruchs 1, **dadurch gekennzeichnet, dass** zusätzlich zum CNC-Rundtisch (7) ein Gegenspannstock (9) zum Halten des Werkzeugträgers an der dem CNC-Rundtisch (7) abgewandten zur Werkstückzuführung (10) weisenden Seite vorgesehen ist und dass der Gegen-Spannstock (9) einen Halter (22) zum Spannen des Werkzeugträgers (14) hat, der zum Verschwenken des jeweiligen Werkzeugträgers (14) um 180° zwischen einer dem CNC-Rundtisch (7) und einer der Werkstückzuführung (10) zugewandten Stellung ausgebildet ist und dass der Gegen-Spannstock (9) auf Führungen (21) in Richtung der Werkstückzuführung (10) verfahrbar ist.

3. Vertikal-Bearbeitungszentrum nach einem der Ansprüche 1 und 2, **dadurch gekennzeichnet, dass** zum Verfahren des CNC-Rundtisches (7) oder des Gegen-Spannstockes (9) am Werkzeugschlitten (5) und dem CNC-Rundtisch (7) bzw. dem Gegen-Spannstock (9) Andockmittel (18) vorgesehen sind.

4. Vertikal-Bearbeitungszentrum nach einem der vohergehenden Ansprüche, **dadurch gekennzeichnet, dass** die werkzeugzuführung (10) ein um eine zentrale Achse (12) schwenkbares Magazinrad (11) mit den Aufnahmen (13) aufweist.

## Claims

1. A vertical machining centre with a controllably movable tool carriage (5) and with a tool capstan (10) on one side of a processing area, in which a component of the vertical machining centre that is movable in controlled manner in at least one axis is provided between the tool capstan (10) and the machining area for changing workpieces (15), wherein the tool capstan (10) is constructed so as to accommodate and present workpiece holders (14) holding workpieces (15) and is arranged in alignment with a CNC rotatable table (7) on the side of the vertical machining centre on which the respective workpiece holder (14) is retained by the CNC rotatable table (7), and wherein the tool capstan (10) is constructed as a magazine having a plurality of seatings (13) for workpiece holders (14) that is movable in synchronised manner, **characterised in that** the CNC rotatable table (7) is movable on guides (8) towards the tool capstan (10) for changing the workpiece holders (14), and that besides the CNC rotatable table (7) a fixed bearing (9) is provided on the side facing away from the rotatable table (7) and towards the tool capstan (10) for steadying the workpiece carrier, wherein the fixed bearing (9) is arranged so as to be movable out of the collision area with the workpiece holder (14).

2. The vertical machining centre as recited in preamble of claim 1, **characterised in that** besides the CNC rotatable table (7) a fixed bearing (9) is provided on the side facing away from the rotatable table (7) and towards the tool capstan (10) for steadying the workpiece carrier, that the fixed bearing (9) has a holder (22) for clamping the workpiece carrier (14), which holder is constructed so as to swivel the respective workpiece carrier (14) through 180° between a position facing the CNC rotatable table (7) and a position facing the tool capstan (10), and that the fixed bearing (9) is movable towards the tool capstan (10) on guides (21).

3. The vertical machining centre as recited in either of claims 1 or 2, **characterised in that** docking means (18) are provided on the tool carriage (5) and on the CNC rotatable table (7) and the fixed bearing (9) for moving the CNC rotatable table (7) or the fixed bearing (9).

4. The vertical machining centre as recited in any of the preceding claims, **characterised in that** the tool capstan (10) has magazine wheel (11) with the seatings (13) that is rotatable about a central axis (12).

## Revendications

1. Centre d'usinage vertical avec un chariot porte-outil (5) mobile de manière commandée et avec une alimentation de pièces (10) sur un côté d'une zone d'usinage, pour laquelle un composant du centre d'usinage vertical, mobile de manière commandée sur au moins un axe, est prévu pour le changement des pièces (15) entre l'alimentation de pièces (10) et la zone d'usinage, l'alimentation de pièces (10) étant configurée pour la mise à disposition et la prise de porte-pièces (14) avec des pièces (15) et étant disposée alignée avec une table tournante CNC (7) sur le côté du centre d'usinage vertical, dans laquelle le porte-pièces (14) concerné est tenu par la table tournante CNC (7), et l'alimentation de pièces (10) étant réalisée sous la forme d'un magasin se déplaçant de manière cyclée, avec plusieurs logements (13) pour des porte-pièces (14), **caractérisé en ce que** la table tournante CHC (7) est mobile sur des glissières (8) en direction de l'alimentation de pièces (10) pour la changement de porte-pièces (14) et **en ce que**, en plus de la table tournante CNC (7), une contre-poupée de serrage (9) est prévue du côté opposé à la table tournante CNC (7) et orienté vers l'alimentation de pièces (10), pour tenir le porte-pièces, la contre-poupée de serrage (9) étant disposée de manière à pouvoir se déplacer hors de la zone de collision avec le porte-pièces (14).

2. Centre d'usinage vertical selon le préambule de la revendication 1, **caractérisé en ce que**, en plus de la table tournante CNC (7), une contre-poupée de serrage (9) est prévue du côté opposé à la table tournante CNC (7) et orienté vers l'alimentation de pièces (10), pour tenir le porte-pièces, **en ce que** la contre-poupée de serrage (9) est munie d'un appui (22) pour le serrage du porte-pièces (14), configuré pour le pivotement du porte-pièces (14) concerné de 180° entre une position orientée en direction de la table tournante CNC (7) et une position orientée en direction de l'alimentation de pièces (10), et **en ce que** la contre-poupée de serrage (9) est mobile sur des guidages (21) en direction de l'alimentation de pièces (10).

3. Centre d'usinage vertical selon l'une des revendications 1 et 2, **caractérisé en ce que** des moyens d'accostage (18) sont prévue sur le chariot porte-outil (5) et sur la table tournante CNC (7) ou sur la contre-poupée de serrage (9), pour déplacer la table tournante CNC (7) ou la contre-poupée de serrage (9).

4. Centre d'usinage vertical selon l'une des revendications précédentes, **caractérisé en ce que** l'alimentation de pièces (10) possède une roue magasin (11) pivotant autour d'un axe central (12) et portant les logements (13).
